# EUROPÄISCHE PATENTANMELDUNG

(11) **EP 1 797 985 A1**
(43) Veröffentlichungstag der Anmeldung: **20.06.2007**
(21) Anmeldenummer: 05027790.4
(22) Anmeldetag: 19.12.2005
(51) Int. Cl.: B23K 9/04, B23K 37/06

(54) **Schweissverfahren und Schweissvorrichtung**

(71) Anmelder: SIEMENS AKTIENGESELLSCHAFT, 80333 München (DE)
(72) Erfinder: Ladru, Francis-Jurjen, Dr., 14050 Berlin (DE); Reich, Gerhard, 10717 Berlin (DE); Reymann, Helge, 14167 Berlin (DE)

(57) **Zusammenfassung**

Schweißverfahren nach dem Stand der Technik haben den Nachteil, dass sie am Beginn des Verfahrens schlechtere Scheißstellen ergeben als im späteren Verlauf des Verfahrens.

Das erfindungsgemäße Verfahren sieht vor, dass eine Vorlaufplatte (19) verwendet wird, auf der das Schweißverfahren beginnt und dann, wenn das Schweißverfahren eine gleichmäßige Qualität für die Schweißstelle (13) liefern kann auf die zu reparierende Stelle (10) geleitet wird.

## Beschreibung

Die Erfindung betrifft ein Schweißverfahren gemäß dem Oberbegriff des Anspruchs 1 und eine Schweißvorrichtung gemäß Anspruch 5.

Bei einem Schweißverfahren wird das Substrat eines Bauteils aufgeschmolzen, so dass sich Risse im Substrat verschließen, wobei ggf. ein Schweißzusatzwerkstoff, insbesondere in Form von Pulver, hinzugefügt wird, welcher beim Schweißen mit aufgeschmolzen und erstarren gelassen wird.

Insbesondere bei gerichtet erstarrten Bauteilen, die eine längsgerichtete Kornstruktur oder aus einem Einkristall bestehen, werden solche Schweißverfahren auch verwendet, um in dem aufgeschweißten Bereich eine gerichtet erstarrte Struktur einzustellen.

Das Problem bei dem Schweißverfahren besteht jedoch darin, dass der Prozess von Anfang an noch nicht stabil läuft, so dass die Stellen, die als erstes verschweißt werden, gegenüber den anderen geschweißten Bereichen schlechtere Eigenschaften aufweisen und oft noch mal aufgeschmolzen werden müssen.

Es ist daher die Aufgabe der Erfindung, o. g. Problem zu überwinden.

Die Aufgabe wird gelöst durch ein Schweißverfahren gemäß Anspruch 1 und eine Schweißvorrichtung gemäß Anspruch 5.

Die in den Unteransprüchen aufgelisteten Maßnahmen können beliebig miteinander verknüpft werden, um weitere Vorteile zu erzielen.

Der Verfahrensanfangspunkt des Schweißverfahrens liegt hier erfindungsgemäß also auf der Vorlaufplatte, so dass beim Erreichen des Vertiefungsanfangspunktes der Prozess des Schweißens stabil ist und von Anfang an hochwertige und gleichmäßige Eigenschaften des gesamten geschweißten Bereichs erreicht werden.

Ausführungsbeispiele der Erfindung werden nachfolgend unter Bezugnahme auf die Zeichnungen noch näher erläutert.

Es zeigen:
- Figur 1: eine Schweißvorrichtung nach dem Stand der Technik,
- Figur 2: eine erfindungsgemäße Vorrichtung,
- Figur 3, 4: spezielle Bauteile der erfindungsgemäßen Schweißvorrichtung,
- Figur 5: den Ablauf des erfindungsgemäßen Schweißverfahrens,
- Figur 6: eine perspektivische Ansicht einer Turbinenschaufel,
- Figur 7: eine perspektivische Ansicht einer Brennkammer und
- Figur 8: eine perspektivische Ansicht einer Gasturbine.

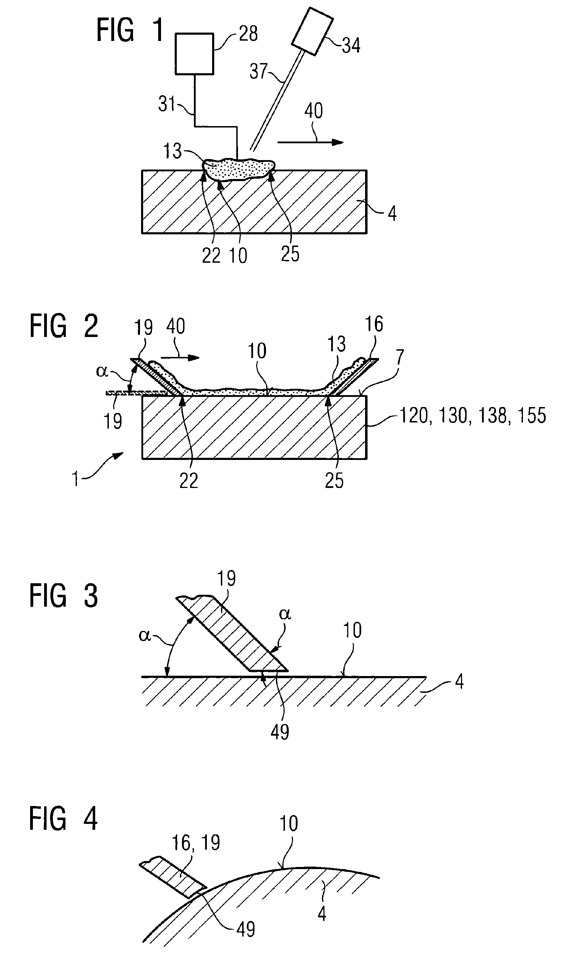

Figur 1 zeigt eine Vorrichtung zum Schweißen nach dem Stand der Technik.
Dabei wird über einen Pulverförderer 31 aus einem Pulverreservoir 28 ein Schweißzusatzwerkstoff 13 einer zu reparierenden Stelle 10 in einem Substrat 4 zugefügt, der 13 mittels einer Wärmequelle 34, insbesondere durch eine Elektronenstrahlkanone, einen Laser 34 oder durch Plasmaschweißen, aufgeschmolzen und erstarren gelassen wird. Dabei wird entweder das Substrat 4 oder der Pulverförderer 31 bzw. die Strahlen 37 der Wärmequelle 34 in einer Verschweißrichtung 40 verfahren, in der 40 sich zum Beispiel ein länglicher Riss 10 oder eine Vertiefung 10 als zu reparierende Stelle 10 ausbreitet. Das Verfahren beginnt an einem Anfangspunkt 22 der Vertiefung 10 und einen Endpunkt 25 der zu reparierenden Stelle 10.

Figur 2 zeigt eine erfindungsgemäße Vorrichtung 1, mit der das erfindungsgemäße Schweißverfahren durchgeführt werden kann.
Das Substrat 4 eines Bauteils 120, 130, 138, 155 hat eine Oberfläche 7, von der ein Teilbereich, die zu reparierende Stelle 10, geschweißt werden soll. Dies kann ein Riss 10 oder eine Vertiefung 10 (wird im Folgenden exemplarisch behandelt) sein, der/die aufgefüllt werden muss.
Ebenso kann großflächig Material aufgetragen werden, um eine Verdickung einer Wand, insbesondere bei hohlen Bauteilen 120, 130 zu erzielen.
Dabei wird der Schweißzusatzwerkstoff 13 verwendet, der den Riss 10, die Vertiefung 10 auffüllt oder die Oberfläche 10 verdickt.
Der Schweißzusatzwerkstoff 13 kann in Form von Pulver während des Schweißens ständig zugeführt werden oder in Form eines Bands oder Drahtes in die Vertiefung 10 eingebracht worden sein.

Das Schweißverfahren beginnt erfindungsgemäß nicht an dem Anfangspunkt 22 der zu reparierenden Stelle 10, ab der die Zuführung oder das Vorhandensein von dem Schweißzusatzwerkstoff 13 notwendig wäre, sondern vorher auf einer separaten Vorlaufplatte 19, die entweder vollständig auf der Oberfläche 7 aufliegt (gestrichelt angedeutet) oder unter einem bestimmten Winkel α an der Oberfläche 7 am Anfangspunkt 22 anliegt. Separat bedeutet, die Vorlaufplatte 19 ist kein Teil des Bauteils 120, 130, 138, 155 oder eines geschweißten Bereichs 14. Ein Spalt zwischen Vorlaufplatte 19 und Oberfläche 7 kann vorhanden sein.
Der Verfahrensanfangspunkt 43 des Schweißverfahrens liegt hier erfindungsgemäß also auf der Vorlaufplatte 19, so dass beim Erreichen des Vertiefungsanfangspunktes 22 der Prozess des Schweißens stabil ist und von Anfang an hochwertige und gleichmäßige Eigenschaften des gesamten geschweißten Bereichs erreicht werden.

Ebenso kann, muss aber nicht, am Endpunkt 25 eine separate Nachlaufplatte 16 vorhanden sein, die am Endpunkt 25 anliegt, wobei die Nachlaufplatte 16 ebenfalls mit dem Schweißzusatzwerkstoff 13 versehen wird und dass das Verfahren an dem Verfahrensendpunkt 46 beendet wird.
Somit wird in der gesamten zu reparierenden Stelle 10 eine homogene Struktur des geschweißten Bereichs 14 erzielt.

Die Vorlauf- oder Nachlaufplatte 16, 19, die vorzugsweise plattenförmig ausgebildet sind, liegt so an der Oberfläche 10 des Substrats 4 an, dass sich möglichst kein, vorzugsweise nur ein kleiner Spalt, zwischen der Oberfläche 10 und einer Kante, also der Kontaktfläche 49 der Vorlauf- 16 oder Nachlaufplatte 19 ergibt (Figur 3), d. h. die Vorderkante der Vorlaufplatte 16 ist schräg ausgeführt.

Ggf. sind die Berührungsfläche 49 der Platten 16, 19, wie eine gekrümmte Oberfläche 10 eines Bauteils 4, wie es zum Beispiel bei Turbinenschaufeln 120, 130 der Fall ist, gekrümmt (Figur 4).

Figur 4 zeigt den Ablauf des erfindungsgemäßen Schweißverfahrens.
Es wird eine Vorlaufplatte 19 verwendet auf dem das Schweißverfahren an einem Verfahrensendpunkt 43 gestartet wird. Zumindest an dem Anfangspunkt 22 läuft das Scheißverfahren stabil (Figur 4a). Der Abstand zwischen Verfahrensanfangspunkt 43 und Anfangspunkt 22 beträgt vorzugsweise 2mm - 10mm.

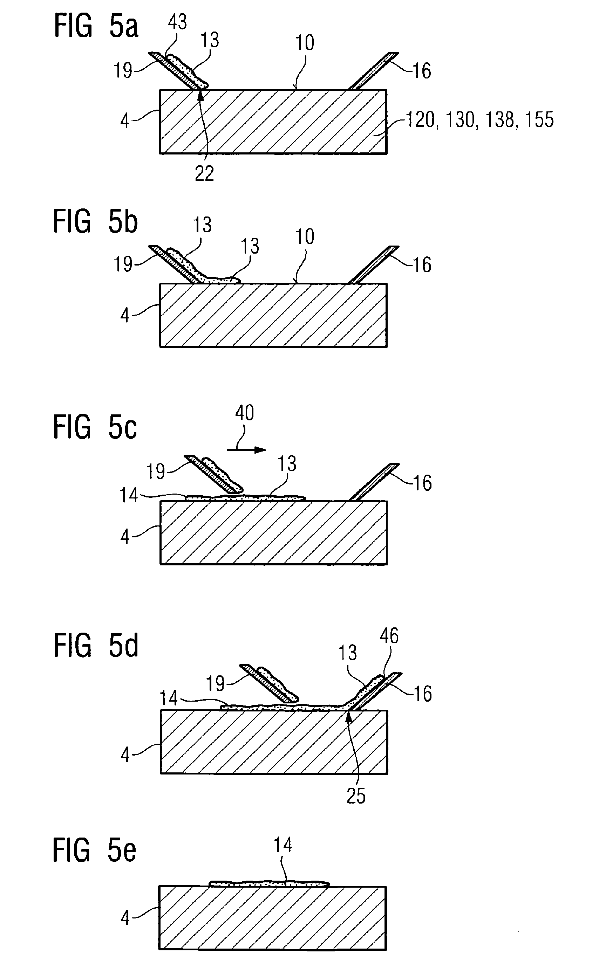

Das Verfahren läuft dann weiter so ab, dass der Schweißzusatzwerkstoff 13 auf oder in die zu reparierende Stelle 10 gebracht wird (Figur 5b).

Dabei kann, muss aber nicht, die Vorlaufplatte 19 verschoben werden, so dass sich diese auch über einen bereits geschweißten Bereich 14 befindet. Dies hat den Vorteil, dass schon geschweißte Bereiche 14 nicht mehr beispielsweise durch eine Dampfwolke des gerade zu schweißenden Bereich 13 verunreinigt werden (Figur 5c).
Anstatt die Vorlaufplatte 19 zu verschieben, kann auch eine weitere (nicht dargestellte) Abschirmplatte verwendet und verschoben werden.
Das Schweißverfahren wird bis zu dem Vertiefungsendpunkt 25 durchgeführt und läuft dann vorzugsweise noch über eine Nachlaufplatte 16 weiter bis es einen Verfahrensendpunkt 46 erreicht (Figur 5d).

Die Vorlaufplatten 16, 19 werden entfernt, so dass dann das fertig reparierte Bauteil 1 vorliegt (Figur 5e).

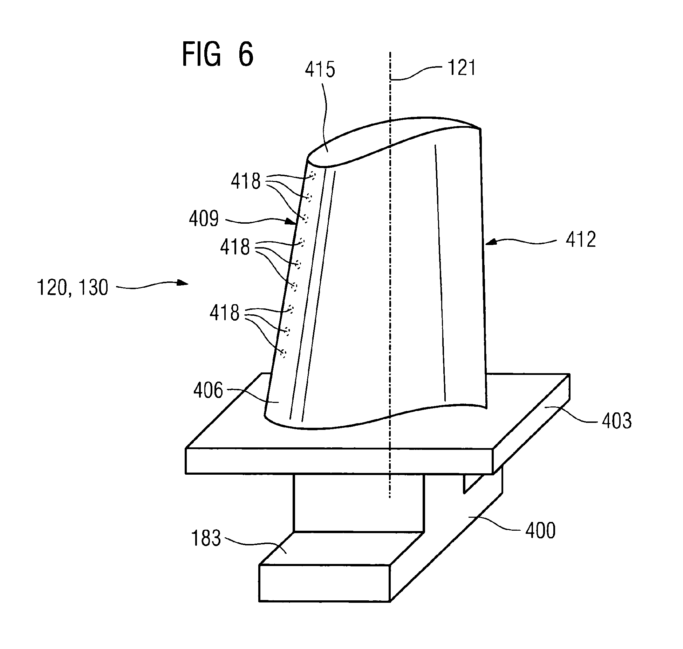

Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrA1X kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt oder z.B. atmosphärisches Plasmaspritzen (APS) poröse, mikro- und makrorissbehaftete Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 mit dem erfindungsgemäßen Verfahren repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

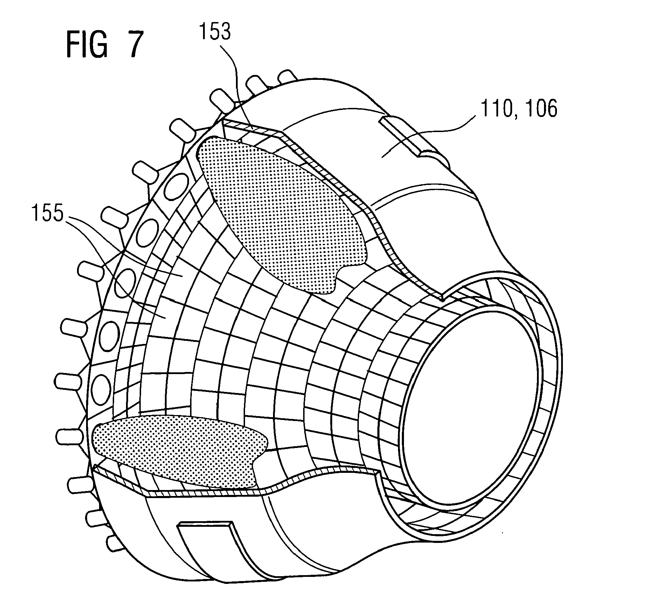

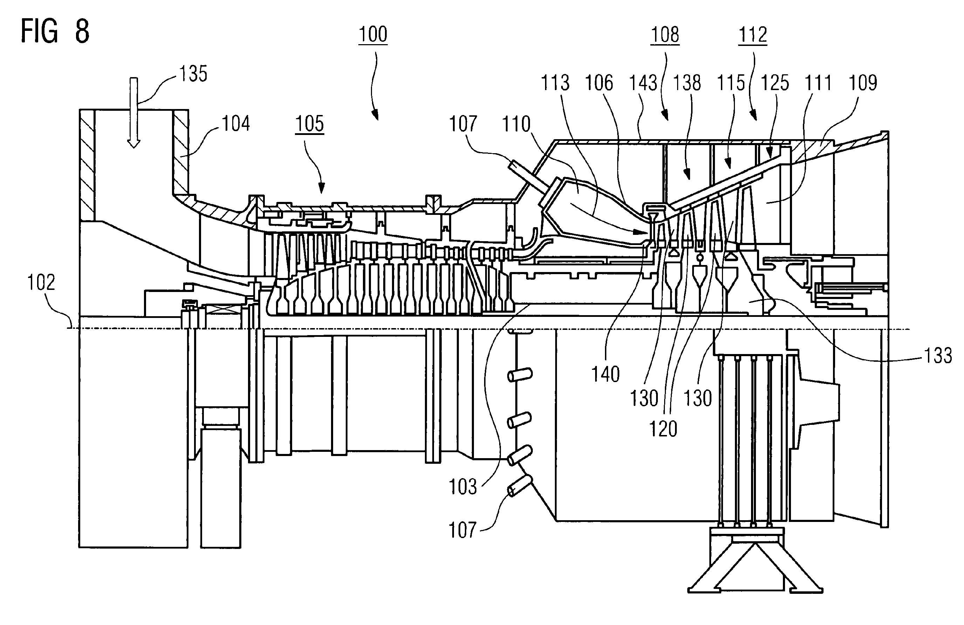

Die Figur 7 zeigt eine Brennkammer 110 einer Gasturbine 100 (Fig. 8).
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 mit dem erfindungsgemäßen Verfahren repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

Die Figur 8 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Schweißverfahren,
bei dem ein Schweißzusatzwerkstoff (13) einer zu reparierenden Stelle (10) eines Bauteils (120, 130, 138, 155) zugeführt wird,
wobei die zu reparierende Stelle (10) einen Anfangspunkt (22) und einen Endpunkt (25) aufweist,
**dadurch gekennzeichnet, dass**
das Schweißverfahren an einem Verfahrensanfangspunkt (43) auf einer separaten Vorlaufplatte (19),
die an dem Anfangspunkt (22) anliegt,
beginnt.

2. Verfahren nach Anspruch 1,
**dadurch gekennzeichnet, dass**
eine separate Nachlaufplatte (16) verwendet wird,
die an dem Endpunkt (25) anliegt,
auf der (16) das Schweißverfahren an einem Verfahrensendpunkt (46) endet.

3. Verfahren nach Anspruch 1 oder 2,
**dadurch gekennzeichnet, dass**
die Vorlaufplatte (19) während des Verfahrens in einer Verschweißrichtung (40) verschoben wird und dabei bereits geschweißte Bereiche (14) abschirmt.

4. Verfahren nach Anspruch 1,
**dadurch gekennzeichnet, dass**
eine Vertiefung (10),
insbesondere ein Riss,
aufgefüllt wird.

5. Schweißvorrichtung (1) zum Schweißen eines Bauteils (120, 130, 138, 155),
aufweisend
eine Wärmequelle,
um einen Schweißzusatzwerkstoff (13) auf zu schmelzen, insbesondere ein Pulverreservoir (28) mit einem Schweißzusatzwerkstoff (13) und ein Pulverförderer (31),
**dadurch gekennzeichnet, dass**
eine separate Vorlaufplatte (19) vorhanden ist,
auf der (19) der Schweißzusatzwerkstoff (13) zugeführt und aufgeschmolzen werden kann.

6. Schweißvorrichtung nach Anspruch 5,
**dadurch gekennzeichnet, dass**
die Vorlaufplatte (19) während des Schweißverfahrens in einer Verschweißrichtung (40) verschiebbar ist.

7. Schweißvorrichtung nach Anspruch 5 oder 6,
**dadurch gekennzeichnet, dass**
eine separate Nachlaufplatte (16) vorhanden ist.

8. Schweißvorrichtung nach Anspruch 5, 6 oder 7,
**dadurch gekennzeichnet, dass**
die Vorlaufplatte (19) und/oder die Nachlaufplatte (16) an der Kante mit der sie an dem Bauteil (120, 130, 138, 155) anliegt, schräg ausgebildet ist.

9. Schweißvorrichtung nach Anspruch 5, 6 oder 7,
**dadurch gekennzeichnet, dass**
die Vorlaufplatte (19) und/oder die Nachlaufplatte (16) an der Kante mit der sie an dem Bauteil (120, 130, 138, 155) anliegt entsprechend der Krümmung der Oberfläche des Bauteils (120, 130, 138, 155) ausgebildet ist.
